Europäisches Patentamt

European Patent Office

Office européen des brevets

(11) Veröffentlichungsnummer: **0 307 810 B1**

(12) **EUROPÄISCHE PATENTSCHRIFT**

(45) Veröffentlichungstag der Patentschrift: **24.11.93**

(51) Int. Cl.5: **G11B 5/70**, G11B 5/71, G11B 5/708

(21) Anmeldenummer: **88114748.2**

(22) Anmeldetag: **09.09.88**

(54) **Magnetische Aufzeichnungsträger.**

(30) Priorität: **16.09.87 DE 3731066**

(43) Veröffentlichungstag der Anmeldung:
**22.03.89 Patentblatt 89/12**

(45) Bekanntmachung des Hinweises auf die
Patenterteilung:
**24.11.93 Patentblatt 93/47**

(84) Benannte Vertragsstaaten:
**DE FR GB NL**

(56) Entgegenhaltungen:
DE-A- 3 217 209
GB-A- 2 153 804

(73) Patentinhaber: **BASF Aktiengesellschaft
Carl-Bosch-Strasse 38
D-67063 Ludwigshafen(DE)**

(72) Erfinder: **Kovacs, Jenoe, Dr.
Kantstrasse 9
D-6717 Hessheim(DE)**
Erfinder: **Melzer, Milena
Kirchenstrasse 116
D-6700 Ludwigshafen(DE)**
Erfinder: **Balz, Werner, Dr.
Kropsburgstrasse 44
D-6703 Limburgerhof(DE)**
Erfinder: **Lenz, Werner, Dr.
Heinrich-Baermann-Strasse 14
D-6702 Bad Dürkheim(DE)**
Erfinder: **Loch, Werner, Dr.
In der Bleiche 2
D-6701 Erpolzheim(DE)**
Erfinder: **Jakusch, Helmut, Dr.
Lorscher Ring 6 c
D-6710 Frankenthal(DE)**

EP 0 307 810 B1

## Beschreibung

Die Erfindung betrifft magnetische Aufzeichnungsträger, welche auf einem nichtmagnetischen Trägermaterial mindestens eine darauf haftfest aufgebrachte magnetisierbare Schicht aufweisen, wobei die magnetisierbare Schicht im wesentlichen aus in einem organischen Polymerbindemittel, einem Dispergierhilfsmittel, einem Gleitmittel und weiteren üblichen Zusatzstoffen feinverteiltem magnetischem Material besteht.

Bei der Herstellung von magnetischen Aufzeichnungsträgern, welche aus einem meist flexiblen Trägermaterial und einer Magnetschicht aus einem oder mehreren magnetischen Pulvern und einem oder mehreren dieses Pulver umhüllenden organischen Bindemittel bestehen, werden in zunehmendem Maße sehr feinteilige Pulver eingesetzt. Diese magnetischen Pulver zeichnen sich gegenüber den üblichen grobteiligen durch besseren Rauschpegelabstand bei Audio- und Videobändern und durch bessere Auflösung bei Datenträgern aus. Dies ermöglicht die Herstellung von magnetischen Aufzeichnungsträgern, welche sowohl für hohe Aufzeichnungsdichten geeignet sind, als auch einen verbesserten Signal-Rauschabstand aufweisen. Bei derartig aufgebauten Magnetschichten ist jedoch die Widerstandsfähigkeit der Schichtoberfläche gegen Abrieb sehr gering. Dies bewirkt insbesondere bei Videobändern ein schlechtes Dauerlaufverhalten, eine Beschädigung der Schicht bei der Berührung mit den Magnetköpfen und anderen Teilen sowie ein Verschmieren oder sogar ein Zusetzen des Magnetkopfes durch Schichtabrieb. Diese Schwierigkeiten werden besonders im Wechselklima verstärkt.

Um diese Nachteile zu beheben, wurde mehrfach vorgeschlagen, die Härte der Schicht durch den Zusatz von harten nichtmagnetischen Oxidteilchen anzuheben. So beschreibt die DE-A 32 11 780 den Zusatz von Schleifmitteln mit einer Mohs-Härte von mindestens 6 zu Verbesserung der Lebensdauer der Magnetschicht. Als Schleifmittel wurden u.a. neben $\alpha$-Eisen(III)oxid auch Aluminiumoxid, Siliciumoxid, Chromoxid, Siliciumkarbid vorgeschlagen. Auf diese Weise wird zwar eine erhöhte Festigkeit der Magnetschicht erreicht, aber der Zusatz dieser Schleifteilchen führt auch zu einem erhöhten Abrieb des Magnetkopfes.

Die gleichzeitige Verbesserung sowohl der Abriebfestigkeit der Magnetschicht als auch der verminderten Abriebwirkung der Schicht gegenüber dem Magnetkopf soll gemäß der DE-A 31 28 005 sowie der DE-A 32 17 209 mit Hilfe einer Kombination verschiedener nichtmagnetischer, harter, feinkörniger Pulver mit einer Mohs'schen Härte von mindestens 6 ermöglicht werden. Auch der Zusatz einer Fettsäure und eines Fettsäureesters neben dem Schleifmaterial wurde bereits beschrieben (DE-A 32 11 779), ebenso wie die weitere Kombination mit Caliumcarbonat (DE-A 32 03 601) oder die Abmischung der verschleißfesten Metalloxid mit Ethylenstearylbiamid (DE-B 30 24 078). Alle diese Vorschläge lösen zwar die genannten Probleme, sie befriedigen jedoch nicht, wenn die Gesamteigenschaften des magnetischen Aufzeichnungsträgers, wie die mechanischen, die elektroakustischen bzw. Video-Eigenschaften sowie die Wechselwirkung mit dem Aufzeichnungs-/Wiedergabegerät, in Betracht gezogen werden.

Es bestand daher die Aufgabe, magnetische Aufzeichnungsträger bereitzustellen, welche auf einem nichtmagnetischen Trägermaterial mindestens eine darauf haftfest aufgebrachte magnetisierbare Schicht aufweisen, wobei die Zusammensetzung der magnetisierbaren Schicht derart ist, daß sie die genannten Nachteile nicht aufweist und insbesondere in ihrer mechanischen Widerstandsfestigkeit, ihren Aufzeichnungs- und Wiedergabeeigenschaften als auch ihrer Beeinflussung und Beeinflußbarkeit der Geräteteile, mit denen sie in Kontakt kommt, den gestellten Anforderungen optimal genügt.

Es wurde nun gefunden, daß die Aufgabe mit einem magnetischen Aufzeichnungsträger aus einem nichtmagnetischen Trägermaterial und mindestens einer darauf haftfest aufgebrachten magnetisierbaren Schicht, im wesentlichen bestehend aus in einem organischen Bindemittel, einem Dispergierhilfsmittel, einem Gleitmittel und weiteren üblichen Zusatzstoffen feinverteiltem magnetischem Material, gelöst werden kann, wenn die magnetisierbare Schicht

1. mindestens ein feinteiliges magnetisches Material mit einer spezifischen Oberfläche nach BET von mindestens 25 m$^2$/g,

2. mindestens ein feinteiliges nichtmagnetisches Metalloxid mit einer Härte nach Mohs von größer 5 und einer spezifischen Oberfläche nach BET von mindestens 2 m$^2$/g in einer Menge von 1 bis 20 Gew.%, bezogen auf die Menge an magnetischem Material,

3. mindestens ein Gleitmittel aus der Gruppe der Siliconharze, Polyethylenwachse, Paraffine und der Metallsalze der Stearin-, Öl- und Myristinsäure in einer Menge von 1 bis 10 Gew.%, bezogen auf die Menge an magnetischem Material und

4. ein Kammblockcopolymeres auf der Basis einer Polyethylenimin-Kette mit einem Molekulargewicht von mindestens 2000 und mit Polyamid- und/oder Polyesterseitenketten mit einem Molekulargewicht von mindestens 500 als Dispergierhilfsmittel in einer Menge von 1 bis 20 Gew.%, bezogen auf die Menge an

2

magnetischem Material
enthält.

Durch das Zusammenwirken der vier, die erfindungsgemäßen magnetischen Aufzeichnungträger kennzeichnenden Komponenten konnten in überraschender Weise die aufgabengemäß geforderten, vorteilhaften Eigenschaften dieser Aufzeichnungsmedien erreicht werden. So zeichnen sich die erfindungsgemäßen magnetischen Aufzeichnungträger durch eine gleichmäßige und homogene Beschichtung aus. Die Schichtoberfläche ist glatt mit Rauhigkeiten unter 0,15 $\mu$m und ohne Defekte, wie Warzen und ähnliches. Besonders hervorzuheben ist die Kratzfestigkeit der Schicht. Diese Verbesserungen der Schichtqualität wirken sich vor allem beim Einsatz der erfindungsgemäßen Aufzeichnungträger als Videobänder aus. Auf diese Weise lassen sich verbesserte Signal/Rauschverhältnisse und ein verbessertes Modulationsrauschen erzielen sowie Standbildfestigkeit und Dauerlaufeigenschaften wesentlich anheben.

Als magnetische Materialien werden die bekannten, ferrimagnetischen, nadelförmigen Eisenoxide, wie Magnetite, Bertholide und insbesondere Gamma-Eisenoxide, vorzugsweise in Kobalt-modifizierter Form mit Koerzitivfeldstärken von mehr als 28 kA/m, sowie Bariumferrite und ebenfalls die ferromagnetischen Materialien, wie das nadelförmige Chromdioxid und die nadelförmigen Eisenteilchen, vorteilhafterweise als Legierungen mit Kobalt und/oder Nickel. Wesentliche Voraussetzung für die Eignung dieser genannten magnetischen Materialien ist die nach BET definierte spezifische Oberfläche

$$S_{N_2},$$

von mindestens 25 m$^2$/g, gemessen gemäß DIN 66 132 mit Hilfe eines Ströhlein-Areameters nach dem Einpunkt-Differenz-Verfahren nach Haul und Dümbgen. Der Anteil des magnetischen Materials an der Gesamtmenge der Magnetschicht beträgt zwischen 70 und 80 Gew.%.

Neben diesen magnetischen Materialien sind als weitere Feststoffe in der Magnetschicht 1 bis 20, vorzugsweise 8 bis 15 Gew.%, bezogen auf die Menge an magnetischem Material, feinteilige, vorzugsweise kugel- bzw. würfelförmige nichtmagnetische Metalloxide, wie beispielsweise Al$_2$O$_3$, ZrO$_2$, Cr$_2$O$_3$ oder $\alpha$-Fe$_2$O$_3$ enthalten. Es lassen sich auch andere, üblicherweise eingesetzte Oxide heranziehen. Voraussetzung für ihre Eignung zur Verwendung bei den erfindungsgemäßen magnetischen Aufzeichnungsträgern ist eine Härte nach Mohs von größer 5 und eine nach BET definierte spezifische Oberfläche

$$S_{N_2}$$

von größer 2 m$^2$/g, vorzugsweise von 5 bis 12 m$^2$/g. Die mittlere Teilchengröße beträgt 0,1 bis 1,8, vorteilhafterweise 0,3 bis 1,5 $\mu$m.

Als Gleitmittel kommen die oben genannten Verbindungen in einer Menge von 1 bis 10, vorzugsweise 2 bis 5 Gew.%, bezogen auf die Menge an magnetischem Material zum Einsatz. Unabhängig von diesen Stoffen kann es zweckmäßig sein, weitere übliche Schmiermittel, wie Ruß oder auf Ruß gepfropftes Polymer, anorganische feine Pulver, wie Molybdändisulfid oder Wolframdisulfid, synthetische feine Harzpulver, wie Ethylen-Vinylchlorid-Copolymerisate oder Polytetrafluorethylen, $\alpha$-Olefine, ungesättigte aliphatische Kohlenwasserstoffe, die bei Raumtemperatur flüssig sind, aliphatische Carbonsäureester einbasischer aliphatischer Säuren mit 12 bis 20 Kohlenstoffatomen und einwertiger Alkohole mit 3 bis 12 Kohlenstoffatomen zu verwenden. Die Gesamtmenge an Schmiermitteln darf jedoch 20 Gew.%, vorzugsweise 10 Gew.% nicht übersteigen.

Die Menge an Kammblockcopolymeren in der magnetisierbaren Schicht beträgt 1 bis 20, vorzugsweise 2 bis 15 Gew.%, bezogen auf die Menge an magnetisierbarem Material. Die geeigneten Verbindungen sind aufgebaut aus einer Polyethylenimin-Kette als Grundgerüst mit einem Molekulargewicht von mindestens 2 000, zweckmäßigerweise 6 000 bis 25 000 und mit Seitenketten auf Polyester- und/oder Polyamidbasis mit jeweiligen Molekulargewichten von mindestens 500, zweckmäßigerweise 800 bis 2 000. Diese Kammblockcopolymeren sind bekannt und u.a. in der GB-A 2 153 804 beschrieben. Daneben kann es vorteilhaft sein, noch weitere Dispergierhilfsmittel, wie aliphatische Säuren mit 12 bis 18 Kohlenstoffatomen, deren Metallseifen, deren fluorierte Ester-Derivate sowie deren Amide oder auch Alkylenoxid-Alkylphosphorsäureester, Lecithin oder quartäre Ammoniumsulfate von Trialkylpolyolefinoxid sowie höhere Alkohole mit 12 oder mehr Kohlenstoffatomen und ihre Schwefelsäureester zu verwenden.

Die organischen Bindemittel, die für die Herstellung der magnetisierbaren Schichten verwendet werden, sind Polyvinylformale, Polyurethanelastomere, Mischungen aus Polyisocyanaten und höhermolekuularen Polyhydroxylverbindungen mit Vinylchlorid-Polymerisaten mit über 60 % an Vinylchlorid-Molekülbausteinen, z.B. Vinylchlorid-Copolymerisate mit Vinylestern von Monocarbonsäuren mit 2 bis 9 C-Atomen, Estern von aliphatischen Alkoholen mit 1 bis 9 C-Atomen und ethylenisch ungesättigten Carbonsäuren mit 3 bis 5 C-Atomen, wie die Ester der Acrylsäure, Methacrylsäure oder Maleinsäure, oder diesen Carbonsäuren selbst als Comonomere sowie hydroxylgruppenhaltige Vinylchlorid-Copolymerisate, die durch partielle Verseifung von Vinylchlorid-Vinylester-Copolymerisaten oder direkte Copolymerisation von Vinylchlorid mit hydroxylhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen der angegebenen Polymeren. Bevorzugte Bindemittel sind Polyvinylformal-Binder, Polyurethanelastomer-Abmischungen der genannten Art, vor allem mit Polyvinylformalen. Als Polyurethenelastomer-Binder werden handelsübliche elastomere Polyurethane aus Adipinsäure, 1,4-Butandiol und 4,4'-Diisocyanatodiphenylmethan bevorzugt angewandt. Als organisches Lösungsmittel eignen sich für die Herstellung der Dispersion die hierfür bekannten organischen Lösungsmittel, insbesondere aromatische Kohlenwasserstoffe, wie Benzol, Toluol oder Xylol, Alkohole, wie Propanol oder Butanol, Ketone, wie Aceton oder Methylethylketon, Ether, wie Tetrahydrofuran oder Dioxan, sowie Gemische solcher Lösungsmittel.

Die Herstellung der magnetisierbaren Schichten erfolgt in bekannter Weise. Hierzu wird das magnetische Material mit dem Bindemittel und ausreichend Lösungsmittel in einer Dispergiermaschine, z.B. einer Kugelmühle oder einer Rührwerksmühle, unter Zusatz des Dispergierhilfsmittels und den weiteren Zusatzstoffen dispergiert. Zur Einstellung des zweckmäßigen Bindemittel-Pigment-Verhältnisses kann das Bindemittel der Mischung entweder in festem Zustand oder in Form von 12- bis 60 %igen Lösungen zugegeben werden. Die Dispersionen für die erfindungsgemäßen magnetischen Aufzeichnungsträger weisen sehr gute Dispersionsstabilität und Fließgrenze auf.

Die Dispersion wird nun mit Hilfe üblicher Beschichtungsmaschinen, z.B. mittels eines Linealgießers, auf den nichtmagnetisierbaren Träger aufgetragen. Als nichtmagnetisierbare Träger lassen sich die üblichen Trägermaterialien verwenden, insbesondere Folien aus linearen Polyestern, wie Polyethylenterephthalat, im allgemeinen in Stärken von 4 bis 200 $\mu$m und insbesondere von 6 bis 36 $\mu$m. Bevor die noch flüssige Beschichtungsmischung auf dem Träger getrocknet wird, was zweckmäßigerweise bei Temperaturen von 50 bis 90 °C während 2 bis 5 Minuten geschieht, werden die anistropen Magnetteilchen durch die Einwirkung eines Magnetfeldes entlang der vorgesehenen Aufzeichnungsrichtung orientiert. Anschließend werden die Magnetschichten auf üblichen Maschinen durch Hindurchführen zwischen geheizten und polierten Walzen, gegebenenfalls unter Anwendung von Druck, bei Temperaturen von 50 bis 100 °C, vorzugsweise 60 bis 90 °C, geglättet und verdichtet. Die Dicke der Magnetschicht beträgt im allgemeinen 2 bis 20 $\mu$m, vorzugsweise 3 bis 15 $\mu$m.

Die Erfindung wird anhand der folgenden Beispiele im Vergleich zu Versuchen nach dem Stand der Technik näher erläutert. Die in den Beispielen und Vergleichsversuchen genannten Teile und Prozente beziehen sich, soweit nicht anders angegeben, auf das Gewicht.

Beispiel 1

72,9 Teile eines nadelförmigen cobaltdotierten Gamma-Eisenoxidpulvers mit einer $H_c$ von 52 kA/m und einer BET-Oberfläche von 43 m$^2$/g, wurden zusammen mit 8,1 Teilen eines $CrO_2$-Pigmentes, dessen $H_c$ 42 kA/m und dessen BET-Oberfläche 28 m$^2$/g betrug, 4,05 Teilen eines kugelförmigen $Al_2O_3$-Pulver mit einem mittleren Teilchendurchmesser von 0,4 $\mu$m und 0,81 Teilen eines feinen Rußproduktes in 31,15 Teilen einer 13 %igen Lösung eines thermoplastischen Polyurethans aus Adipinsäure, Butandiol-1,4 und 4,4'-Diisocyanatodiphenylmethan in einem Gemisch aus gleichen Teilen Tetrahydrofuran und Dioxan, 10,13 Teilen einer 20 %igen Lösung eines Phenoxyharzes aus Bisphenol A und Epichlorhydrin mit einem mittleren Molgewicht von 30.000 und einem Hydroxylgruppengehalt von 6 %, 2,7 Teilen einer 25 %igen Lösung eines Vinylchlorid-Vinylalkohol-Vinylacetat Copolymerisates mit einem Molgewicht von 25.000 sowie weiteren 84,27 Teilen des genannten Lösungsmittelgemisches in einer 600 Volumenteilen fassenden, mit 800 Teilen Stahlkugeln mit einem Durchmesser von 2 bis 4 mm gefüllten Kugelmühle unter Zusatz von 9,72 Teilen eines Dispergierhilfsmittels auf Basis eines Kammpolymeren aus Polyimin-Basiskette und Polyesterseitenketten mit einem Gesamtmolgewicht von 60.000 72 Stunden dispergiert. Anschließend wurden 51,76 Teile des angegebenen Polyurethans, 16,82 Teile des Phenoxyharzes, 4,49 Teile des Vinylchlorid-Copolymerisates, 2,02 Teile Isobutylstearat und 19,14 Teile des Lösungsmittelgemisches sowie 0,4 Teile Stearinsäure zugeführt und nochmals 24 Stunden dispergiert.

Nach Beendigung der Dispergierung wurden 4,17 Teile einer 50 %igen Lösung eines Triisocyanates, gefertigt aus 3 Molen Toluylendiisocyanat und 1 Mol 1,1,1-Trimethylolpropan in Ethylacetat, unter Einwirkung eines Schnellrührers hinzugefügt. Nach dem Filtrieren der Dispersion wurde diese schichtförmig auf eine 19,5 $\mu$m dicke Polyethylenterephthalatfolie unter gleichzeitiger Ausrichtung der Magnetpartikel aufgetragen. Nach dem Trocknen wurde die 6,5 $\mu$m dicke Magnetschicht durch Hindurchführen zwischen beheizten Walzen unter Druck (90°C, Liniendruck 200 kg) geglättet und die beschichtete Folienbahn in 1" (2,54cm) breite Bänder geschnitten.

An diesen Bändern wurden die folgenden Tests durchgeführt, deren Ergebnisse in Tabelle 1 angegeben sind.

Dauerlauf

Ein Band mit einer Länge von 1460 m wird auf einem Profivideorecorder mit einer bespielten Teilstrecke von 14,4 m entsprechend einer Minute Spielzeit 2 000 mal abgespielt und nach jedem Abspielen zurückgespult. Danach werden die Köpfe und das Band unter dem Mikroskop auf Abrieb untersucht.

Wechselklimatest

Bänder mit einer Länge von 1460 m wurden bei 85 % Luftfeuchte mit einer Zykluszeit von 12 Stunden bei 5°C und bei 45°C 1 Woche lang getempert. Anschließend werden die Bänder 24 Stunden bei Zimmertemperatur gelagert und danach der Dauerlauftest wiederholt.

Standbildfestigkeit

Die Angabe der Dauerstandzeit ist die Zeitspanne, in der eine Bildaufzeichnung auf einem handelsüblichen Video-Recorder als Standbild, d.h. bei stehendem Magnetband und rotierendem Kopfrad, bis zum ersten Pegeleinbruch wiedergegeben werden kann.

Vergleichsversuch 1

Es wurde wie in Beispiel 1 beschrieben verfahren, jedoch wurde als magnetisches Material ein cobaltdotiertes $\gamma$-Fe$_2$O$_3$ mit einer BET-Oberfläche von 23 m$^2$/g eingesetzt. Die Ergebnisse sind in Tabelle 1 angegeben.

Vergleichsversuch 2

Es wurde wie in Beispiel 1 beschrieben verfahren, jedoch wurde als Dispergierhilfsmittel ein aus Oxoalkohol einer $C_{13}$-$C_{16}$-Fraktion mit Ethylenoxid, Propylenoxid und Phosphorsäure hergestelltes Produkt verwendet. Die Ergebnisse sind in Tabelle 1 angegeben.

Vergleichsversuch 3

Es wurde wie in Beispiel 1 beschrieben verfahren, jedoch wurde die Dispersion ohne Al$_2$O$_3$-Zusatz hergestellt. Die Ergebnisse sind in Tabelle 1 angegeben.

Vergleichsversuch 4

Es wurde wie in Beispiel 1 beschrieben verfahren, jedoch wurde die Dispersion ohne Isobutylstearat hergestellt. Die Ergebnisse sind in Tabelle 1 angegeben.

Tabelle 1

| | Beispiel 1 | Vergleichsversuch 1 | Vergleichsversuch 2 | Vergleichsversuch 3 | Vergleichsversuch 4 |
|---|---|---|---|---|---|
| Dauerlauf | kein Abrieb | nach zwei Durchläufen Kopfzuschmieren | kein Abrieb | sofortiges Kopfzuschmieren | sofortiges Kopfzuschmieren |
| Wechselklimatatest | kein Abrieb | nach zwei Durchläufen Kopfzuschmieren | sofortiges Kopfzuschmieren | sofortiges Kopfzuschmieren | sofortiges Kopfzuschmieren |
| Standbild | > 420 Min. | 2 min. | 20 Min. | < 1 Min. | < 1 Min. |

Beispiel 2

700 Teile eines nadelförmigen Eisenpulvers mit einer spezifischen Oberfläche von 48 m$^2$/g und einer mittleren Teilchenlänge von 0,3 $\mu$m sowie einer H$_c$ von 99 kA/m wurden zusammen mit 91 Teilen eines kugelförmigen Al$_2$O$_3$-Pulvers mit einem mittleren Teilchendurchmesser von 0,4 $\mu$m in 722,8 Teilen einer 13 %igen Lösung eines thermoplastischen Polyesterurethans aus Adipinsäure, Butandiol-1,4 und 4,4'-Diisocyanatdodiphenylmethan in einem Gemisch aus gleichen Teilen Tetrahydrofuran und Dioxan, 201,3 Teilen einer 20 %igen Lösung eines Phenoxiharzes aus Bisphenol A und Epichlorhydrin mit einem mittleren Molgewicht von 30.000 und einem Hydroxylgruppengehalt von 6 % im genannten Lösungsmittelgemisch in einer 6.000 Volumenteile fassenden, mit 2340 Teilen Keramikkugeln gefüllten Rührwerkskugelmühle unter Zusatz von 3,5 Teilen Stearinsäure und 42 Teilen des Dispergiermittels auf Basis eines Kammpolymeren aus Polyiminhauptkette und Polyamidseitenkette 46 Stunden dispergiert. Anschließend wurden 23,7 Teile Methylstearat zugeführt und nochmals 5 Stunden dispergiert. Nach Beendigung der Dispergierung wurden 58 Teile einer 50 %igen Lösung eines Triisocyanats, gefertigt aus 3 Mol Toluylendiisocyanat und 1 Mol 1,1,1-Trimethylolpropan in Ethylacetat, hinzugefügt und weitere 15 Minuten gerührt. Nach dem Filtrieren der Dispersion wurde diese schichtförmig auf eine 10 $\mu$m dicke Polyethylenterephthalatfolie unter gleichzeitiger Ausrichtung der Magnetpartikel aufgetragen. Nach dem Trocknen wurde die 3 $\mu$m dicke Magnetschicht durch Hindurchführen zwischen beheizten Walzen unter Druck (90°C, Liniendruck 200 kg/cm) geglättet und die beschichte Folienbahn in 1/2 Zoll (1,27cm) breite Bänder geschnitten. An diesen Bändern wurde mit einem handelsüblichen V 2000-Videorecorder der Dauerlauf, die Anzahl der Stunden bis zum ersten Pegeleinbruch von 20 dB und 15 $\mu$s Dauer beim Spielbetrieb einer V 2000-Videocassette, die Standbildfestigkeit sowie der Signal/Rausch-Abstand, das Verhältnis des Luminanzsignals eines 100 % Weißbildes zum Rauschpegel, gemessen mit dem Störspannungsmesser UPSF der Firma Rohde und Schwarz (100 kHz), bestimmt. Die Ergebnisse sind in Tabelle 2 angegeben.

Vergleichsversuch 5

Es wurde wie in Beispiel 2 beschrieben verfahren, jedoch wurde als magnetisches Material ein Eisenpulver mit einer H$_c$ von 92 kA/m und einer spezifischen Oberfläche von 24 m$^2$/g eingesetzt. Die Ergebnisse sind in Tabelle 2 angegeben.

Tabelle 2

| | Beispiel 2 | Vergleichsversuch 5 |
|---|---|---|
| Standbildfestigkeit | > 60 Minuten | < 30 Minuten |
| Dauerlauf | > 100 Stunden | < 50 Stunden (Schmierneigung) |
| Signal/Rauschabstand gemessen gegen Referenzband | + 9 dB | + 4 dB |

Beispiel 3

In einer Stahlkugelmühle mit 6 l Rauminhalt, gefüllt mit 8 kg Stahlkugeln eines Durchmessers von 4 bis 6 mm, wurden 900 g eines kobaltdotierten Eisenoxids mit einer H$_c$ von 50 kA/m und einer spezifischen Oberfläche von 42 m$^2$/g, 54 g eines Dispergiermittels, wie im Beispiel 2 angegeben, zusammen mit 850 g eines Lösungsmittelgemisches aus gleichen Teilen Tetrahydrofuran und Dioxan, 276,9 g einer 13 %igen Lösung eines Polyetherurethans mit einem K-Wert von 60, gemessen 0,5 %ig in Tetrahydrofuran, hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol) in o.g. Lösungsmittelgemisch und 120,1 g einer 20 %igen Lösung eines Copolymers aus Vinylchlorid, Dimethylmaleinat und Diethylmaleinat im Verhältnis 80/10/10 und einem K-Wert von 60, gemessen 0,5 %ig in Tetrahydrofuran, im angegebenen Lösungsmittelgemisch eingefüllt und 90 Stunden dispergiert. Dazu werden in der Nachphase 578 g der Polyurethanlösung, 250 g der angegebenen Copolymerlösung, 0,9 g Siliconöl, 0,9 g Hydrochinon, 1,8 g n-Butylstearat und 9 g Isostearinsäure zugegeben. Nach zwei weiteren Stunden Dispergierung wurde die Dispersion aus der Mühle entnommen und unter Druck durch einen Filter mit 5 $\mu$m Poren filtriert. Nach der Filtration wurden unter kräftigem Rühren pro kg Dispersion 6,7 g einer 75 %igen Lösung eines Triisocyanates aus 3 Mol Toluylidendiisocyanat und 1 Mol Trimethylolpropan in Ethylacetat zugegeben. Unmittelbar danach wurde die Dispersion auf eine 12 $\mu$m dicke Polyethylenterephthalatfolie mittels eines üblichen Linealgießers aufgetragen. Die beschichtete Folie wurde nach Durchlaufen bei Temperaturen zwischen 50 und 90°C getrocknet. Nach der Trocknung wurde die Magnetschicht durch Hindurchführen zwischen auf 70°C beheizten Walzen unter einem Liniendruck von 200 kp/cm verdichtet und geglättet, so daß die Dicke der Magnetschicht 4,5 $\mu$m betrug, und dann in 3,81 mm breite Bänder für Audioanwendung geschnitten.

Die Rauhigkeit $R_z$ der Magnetschicht wurde perthometrisch, der Glanz mit dem Reflektometer der Fa. Lange (Meßkopf 60°) gemessen. Die Messung der magnetischen Eigenschaften wurde in einem Meßfeld von 100 kA/m durchgeführt und zwar die Koerzitivfeldstärke $H_c$ in [kA/m], die remanente Magnetisierung $M_r$ in [mT] und der Richtfaktor Rf als Verhältnis von $M_r$-längs zu $M_r$-quer. Die elektroakustischen Werte wurden gemäß DIN 45 501, DIN 45 403 und DIN 45 512, Blatt 12 gegen das Bezugsband IEC II U 564 W durchgeführt.

Die mechanischen Eigenschaften wurden nach folgenden Tests geprüft:

Abriebverhalten am Recorder

Die Zahl der Durchläufe am Recorder bis zu einem Pegelabfall von 2 dB wird als Lebensdauer angegeben; der dabei entstandene Abrieb am Löschkopf, Tonkopf und an der Tonwelle wird mittels Klebeband abgezogen und nach einer Benotungsskala mit Zahlen von 1 (kein Abrieb) bis 6 (sehr starker Abrieb) benotet.

Kreiden

Das Band mit einer Schleifenlänge von 167 cm wird mit Geschwindigkeit von 24 cm/sec über ein Schleifpapier gezogen, wobei der Bandzug 50 p beträgt. Nach der Laufzeit von 7 min. wird die durch Abrieb auf dem Papier entstandene Färbung beurteilt und nach einer Notenskala benotet, in der Note 1 keine Färbung und Note 10 sehr starke Färbung bedeutet.

Die Prüfergebnisse sind in der Tabelle 3 angegeben.

Beispiel 4

Es wurde wie in Beispiel 3 beschrieben verfahren, jedoch wurden anstelle der 54 g des Dispergiermittels, wie im Beispiel 2 angegeben, nur 27 g dieses Dispergiermittels sowie weitere 27 g eines handelsüblichen, aus Oxoalkoholen ($C_{13}$- bis $C_{16}$-Fraktion), Ethylenoxid, Propylenoxid und Polyphosphorsäure hergestellten Dispergiermittels eingesetzt. Die Ergebnisse sind in Tabelle 3 angegeben.

Vergleichsversuch 6

Es wurde wie in Beispiel 4 beschrieben verfahren, jedoch wurden ausschließlich 54 g eines handelsüblichen, auf Polyphosphorsäureester basierenden Dispergiermittels eingesetzt. Die Ergebnisse sind in Tabelle 3 angegeben.

Vergleichsversuch 7

Es wurde wie in Beispiel 3 beschrieben verfahren, jedoch wurden 900 g eines grobteiligeren, aus Goethit hergestellten $\gamma$-$Fe_2O_3$ mit einer Koezitivfeldstärke von 30 kA/m und einer spezifischen Oberfläche von 24 $m^2$/g und im Versuch 7a) 18 g, im Versuch 7b) 36 g und im Versuch 7c) 54 g des Dispergiermittels, wie im Beispiel 2 angegeben, eingesetzt. Die anderen Komponenten blieben in Art und Menge unverändert. Wegen der geringeren Koerzitivfeldstärke müßten die elektroakustischen Messungen gegen das IEC I-Bezugsband vorgenommen werden. Die Ergebnisse sind in Tabelle 3 angegeben.

Tabelle 3

| | Beispiel 3 | Beispiel 4 | Vergleichsversuche | | | |
|---|---|---|---|---|---|---|
| | | | 6 | 7a | 7b | 7c |
| Dispergierdauer Phase I | 90 h | 60 h | 90 h | 144 h | 144 h | 144 h |
| Unsatiniert: Rauhigkeit Rz (µm) | 0,48 | 0,37 | 0,66 | 0,83 | 0,86 | 0,75 |
| Glanzwert | 78 | 80 | 58 | 60 | 64 | 68 |
| Satiniert: Koerzitivfeldstärke (kA/m) | 50,5 | 50 | 48,5 | 30,1 | 30,2 | 30,2 |
| Remanente Magnetisierung (mT) | 157 | 160 | 155 | 144 | 145 | 147 |
| Richtfaktor | 2,6 | 2,6 | 2,5 | 1,9 | 1,0 | 1,0 |
| Elektroakustische Daten gegen Bezugsband: | | | | | | |
| Empfindlichkeit 315 Hz | IEC II  – 0,5 | IEC II  0 | IEC II  – 0,5 | IEC I  – 0,5 | IEC I  – 0,5 | IEC I  – 0,5 |
| 10 kHz | 0 | 0 | – 0,5 | 0,3 | 0,5 | 0,5 |
| Aussteuerbarkeit 315 Hz | – 0,5 | 0 | – 1 | – 1,7 | – 1,5 | – 1,5 |
| 10 kHz | 0 | 0 | – 1 | 1,1 | 1,3 | 1,3 |
| Mechanische Bandeigenschaften: | | | | | | |
| Kreiden | 3 | 4 | 8 | 6 | 6 | 6 |
| Dauerlauf am Recorder | | | | | | |
| Lebensdauer – Durchläufe | > 100 | > 100 | > 100 | 80 | 90 | 90 |
| Ablagerungen Löschkopf | 2 | 2 | 4 | 4 | 4 | 4 |
| Tonkopf | 1 | 1 | 3 | 4 | 3 | 3 |
| Tonwelle | 1 | 1 | 2 | 2 | 2 | 2 |

**Patentansprüche**

1. Magnetische Aufzeichnungsträger aus einem nichtmagnetischen Trägermaterial und mindestens einer darauf haftfest aufgebrachten magnetisierbaren Schicht, im wesentlichen bestehend aus in einem organischen Bindemittel, einem Dispergierhilfsmittel, einem Gleitmittel und weiteren üblichen Zusatzstoffen feinverteiltem magnetischem Material, dadurch gekennzeichnet, daß die magnetisierbare Schicht

1. mindestens ein feinteiliges magnetisches Material mit einer spezifischen Oberfläche nach BET von mindestens 25 m$^2$/g,

2. mindestens ein feinteiliges nichtmagnetisches Metalloxid mit einer Härte nach Mohs von größer 5 und einer spezifischen Oberfläche nach BET von mindestens 2 m$^2$/g in einer Menge von 1 bis 20 Gew.%, bezogen auf die Menge an magnetischem Material,

3. mindestens ein Gleitmittel aus der Gruppe der Siliconharze, Polyethylenwachse, Paraffine und der Metallsalze der Stearin-, Öl- und Myristinsäure in einer Menge von 1 bis 10 Gew.%, bezogen auf die Menge an magnetischem Material und

4. ein Kammblockcopolymeres auf der Basis einer Polyethylenimin-Kette mit einem Molekulargewicht von mindestens 2000 und mit Polyamid- und/oder Polyesterseitenketten mit einem Molekulargewicht von mindestens 500 als Dispergierhilfsmittel in einer Menge von 1 bis 20 Gew.%, bezogen auf die Menge an magnetischem Material

enthält.

## Claims

1. A magnetic recording medium comprising a non-magnetic base and, firmly applied thereon, one or more magnetizable layers essentially consisting of magnetic material finely dispersed in an organic binder, a dispersant, a lubricant and other conventional additives, wherein the magnetizable layer contains

1. one or more finely divided magnetic materials having a BET specific surface area of not less than 25 m$^2$/g,

2. one or more finely divided nonmagnetic metal oxides having a Mohs hardness greater than 5 and a BET specific surface area of not less than 2 m$^2$/g, in an amount of from 1 to 20% by weight, based on the amount of magnetic material,

3. one or more lubricants from the group consisting of the silicone resins, polyethylene waxes, paraffins and metal salts of stearic, oleic and myristic acid, in an amount of from 1 to 10% by weight, based on the amount of magnetic material, and

4. a comb block copolymer based on a polyethyleneimine chain having a molecular weight of not less than 2,000 and having polyamide and/or polyester side chains having a molecular weight of not less than 500, as a dispersant, in an amount of from 1 to 20% by weight, based on the amount of magnetic material.

## Revendications

1. Support d'enregistrement magnétique consistant en une matière de support non magnétique et au moins une couche magnétisable appliquée sur ce support et y adhérant solidement, cette couche consistant essentiellement en une matière magnétique à l'état de fine division dans un liant organique, un produit auxiliaire dispersant, un agent lubrifiant et d'autres additifs usuels, caractérisé en ce que la couche magnétisable contient :

1. au moins une matière magnétique en fines particules présentant une surface spécifique selon BET d'au moins 25 m$^2$/g,

2. au moins un oxyde métallique non magnétique en fines particules ayant une dureté Mohs supérieure à 5 et une surface spécifique selon BET d'au moins 2 m$^2$/g, en quantité de 1 à 20% du poids de la matière magnétique,

3. au moins un agent lubrifiant choisi dans le groupe des résines de silicones, des cires de polyéthylène, des paraffines et des sels métalliques de l'acide stéarique, de l'acide oléique et de l'acide myristique, en quantité de 1 à 10% du poids de la matière magnétique, et

4. en tant que produit auxiliaire de dispersion, et en quantité de 1 à 20% du poids de la matière magnétique, un copolymère séquencé à structure "en peigne" à base d'une chaîne de polyéthylène-imine de poids moléculaire 2000 au moins et avec des chaînes latérales de polyamide et/ou de polyester à un poids moléculaire de 500 au moins.